Europäisches Patentamt

(19) **European Patent Office**

Office européen des brevets

(11) Veröffentlichungsnummer: **0 064 652**
**B1**

(12) **EUROPÄISCHE PATENTSCHRIFT**

(45) Veröffentlichungstag der Patentschrift:
14.09.88

(21) Anmeldenummer: 82103491.5

(22) Anmeldetag: 24.04.82

(51) Int. Cl.⁴: **F 16 B 17/00, F 16 B 13/14,**
**F 16 G 11/00, E 04 C 5/12**

(54) **Krafteinleitungselement für Faserverbundwerkstoffe.**

(30) Priorität: 09.05.81 DE 3118492

(43) Veröffentlichungstag der Anmeldung:
17.11.82 Patentblatt 82/46

(45) Bekanntmachung des Hinweises auf die Patenterteilung:
14.09.88 Patentblatt 88/37

(84) Benannte Vertragsstaaten:
BE CH DE FR GB IT LI NL

(56) Entgegenhaltungen:
EP - A - 0 014 426
FR - A - 2 138 796
FR - A - 2 234 480
US - A - 4 247 224

(73) Patentinhaber: BAYER AG, Konzernverwaltung RP
Patentabteilung, D-5090 Leverkusen 1 Bayerwerk (DE)

(72) Erfinder: Preis, Lothar, Dr., August-Klerspel-Strasse 42,
D-5060 Bergisch-Gladbach 2 (DE)
Erfinder: Hoffmann, Jürgen, Bilharzstrasse 10,
D-5000 Köln 80 (DE)
Erfinder: Rompf, Kurt, An der Wolfsmaar 5,
D-5060 Bergisch-Gladbach (DE)

# Beschreibung

Die Erfindung betrifft eine krafteinleitende Befestigung eines Stabes aus einem Faserverbundwerkstoff, der zusammenwirkt mit einer in einer Verankerung angeordneten Bohrung wobei Querschnittsform von Bohrung und zu verankerndem Stab einander angepasst sind und die Wandung der Bohrung eine im wesentlichen senkrecht zum Stab verlaufende Profilierung aufweist und zumindest ein Aufweitelement für das Ende des Stabes vorgesehen ist und wobei der zwischen der Wandung der Bohrung dem Aufweitelement und dem am Ende aufgeweiteten Stab verbleibenden Raum mit einer Vergussmasse vollständig ausgefüllt ist (DD-A-146362).

Verbundwerkstoffe aus hochfesten Fasern und Reaktionsharzen erreichen Festigkeiten, die denen hochfester Metalle ebenbürtig sind. Solche Werkstoffe sind für den Anwender darüber hinaus zusätzlich interessant wegen des niedrigeren spezifischen Gewichts, der besseren Korrosionsbeständigkeit und gelegentlich auch wegen der Nicht-Leitfähigkeit.

Bei den stark anisotropen Faserverbundwerkstoffen mit vorwiegend unidirektionaler Faserorientierung treten erhebliche Schwierigkeiten bei der Verankerung auf. Mit den bei metallischen Werkstoffen üblichen Verbindungs- und Verankerungstechniken wie Schrauben oder Klemmen lässt sich die hohe Zugfestigkeit der Stäbe nur zum Teil ausnutzen; Verfahren wie Schweissen oder Verformen sind gar nicht möglich.

Die Übertragung grosser Kräfte erfordert bei Faserberbundwerkstoffen eine besondere Rücksichtnahme auf Spannungssprünge und Querdruckbelastungen. Im Verankerungsbereich muss den unterschiedlichen Längsformänderungen zwischen Stab und Krafteinleitungselement; z.B. durch Ausgleichszwischenschichten, Rechnung getragen werden. Klebeverbindungen sind in ihrer Wirksamkeit besonders bei dynamischer Belastung beschränkt. Verbesserungen lassen sich erreichen, wenn die Klebeverbindung als Schäftung oder mehrschnittige Überlappung ausgeführt wird; der Aufwand hierfür ist aber verhältnismässig hoch. Klebeverankerungselemente sind wegen der notwendigen Eintragungslänge relativ gross.

Mit Klemmverbindungen kann die hohe Festigkeit von Faserverbundwerkstoffen nur zum Teil genutzt werden. Verankerungen durch Klemmen erfordern eine aufwendige Anpassung der Klemmsysteme an das Profil der Stäbe. Ein Ausgleich der unterschiedlichen Längsformänderungen von Profilen und Klemmkrafteinleitung ist dennoch bei dieser Technik schwierig zu realisieren, so dass häufig, auch wenn die Kräfte auf Kosten einer kleinen Baulänge schonend über eine grössere Strecke eingeleitet werden, Spannungsspitzen im Krafteinleitungsbereich Ursache für ein vorzeitiges Versagen sind. Darüber hinaus kann die bei Zugbelastung entstehende Querkontraktion im Einspannbereich sowohl bei Klebe- als auch bei Klemmverankerungen zu Ablösungserscheinungen führen.

In der DD-A-146 362 ist vorgeschlagen worden, bei der Verankerung Klebung und Querdruck zu kombinieren. Solche Krafteinleitungselemente bestehen aus einer konischen Ankerhülse, die dem durch Keile oder Konen aufgeweiteten Stab möglichst exakt angepasst ist. Wenn grössere Kräfte übertragen werden sollen, müssen Stabende und Keile durch Klebung fest miteinander verbunden sein, um eine Keilwirkung (Querpressung) bei Belastung des Profils zu bewirken. Alle bekannten Hülsen/Keil-Systeme für die Verankerung von Stäben aus Faserverbundwerkstoffprofilen sind wegen der notwendigen geometrischen Anpassung aufwendig in der Herstellung und Handhabung und haben darüber hinaus den Nachteil, dass sie im Endbereich relativ breit werden.

FR-A-22 34 480 betrifft einen Ankerbolzen mit kegelstumpfförmigem Ende ohne Spreizelement, der mit Kunstharz in einer Sackbohrung verankert ist. Diese Bohrung muss daher zwangsläufig grösser sein als der Bolzenschaft, und die der Erfindung zugrundeliegende Problematik ist hier nicht gegeben.

Der vorliegenden Erfindung liegt die Aufgabe zugrunde, ein Krafteinleitungselement für einen Stab aus einem Faserverbundwerkstoff bereitzustellen, das die erwähnten Nachteile der bekannten Vorrichtungen vermeidet, das insbesondere weniger aufwendig ist und mit dem die hohen Festigkeitswerte faserverstärkter Stäbe besser genutzt werden können.

Die Aufgabe wird dadurch gelöst, dass die Bohrung über ihre gesamte Länge gleichbleibenden Querschnitt und gleichbleibende Querschnittsform aufweist und dass der Stab über seine gesamte Länge innerhalb der Bohrung von deren Wandung Abstand aufweist, wobei die durch die Aufweitung bedingte natürliche Biegelinie der dabei entstandenen Stabsegmente unverändert erhalten bleibt.

In vielen Fällen entspricht die innenprofilierte Bohrung in einer Verankerung einer innenprofilierten Ankerhülse.

Jedoch ist das erfindungsgemässe Verankerungsprinzip darauf nicht beschränkt. Auch eine innenprofilierte Bohrung in einem Betonbauteil ist zur Aufnahme des ausgeweiteten Stabendes geeignet.

Im Gegensatz zu bekannten Ankerhülsen ist kein direkter Kontakt des Stabes mit der Innenwand erforderlich sondern die Vergussmasse ist dazwischen geschaltet. Die Elemente zum Aufweiten des Stabendes bewirken, dass sich nach dem Vergiessen beispielsweise mit einem Reaktionsharz ein querdruckerzeugender Verankerungsbereich unmittelbar aus der Vergussmasse bilden kann. In diesem Bereich, der wesentlich Anteil an der Kraftübertragung zwischen Stab und Hülse bzw. allgemeiner der Innenwand der Bohrung in einer Verankerung hat, bleibt die natürliche Biegelinie der Stabsegmente unverändert erhalten. Bei Hülsen mit kegliger Innenbohrung muss das Keilelement, in einer Anpassung des geschlitzten Stabendes an den vorgegebenen Innenkonus der Hülse zu erreichen, entsprechend vorgespannt werden, was aber auch eine zwangsweise Veränderung der sich ohne äussere Kräfte ausbildenden Biegelinie der Stabsegmente bedingt und zu örtlich hohen Flächenpressung führt und damit die Tragfähigkeit der Verankerung einschränkt.

Die erfindungsgemässen Krafteinleitungselemente sind sehr leicht herzustellen und zu handhaben, sie erfordern weder grossen maschinellen noch zeitlichen Aufwand. Sie sind an die verschiedensten Aufgaben leicht anpassbar und von geringer Abmessung. Mit ihnen können überraschend grosse Kräfte sowohl statischer als auch dynamischer Art in Stäbe aus einem Faserverbundwerkstoff eingeleitet werden. Unabhängig von der Zusammensetzung und Form der Stäbe von Herstellungstoleranzen der Bohrung und der Genauigkeit der Aufweitung der Stabenden, die die sich jeweils einstellende Biegelinien der Stabsegmente und den tatsächlichen Kraftlinienverlauf beeinflussen, werden durch die Vergussmasse immer optimale Verhältnisse im Krafteinleitungsbereich erhalten. Sollte der Faserverbundwerkstoff von der üblichen runden Stabform abweichen, so ist von einer an das Profil des Faserverbundwerkstofes angepassten innen profifilierten beispielsweise prismatischen Bohrung speziell einer entsprechenden Ankerhülse, auszugehen.

Das Innere der Bohrung der Verankerung zur Aufnahme des Stabes, hat stets einen grösseren lichten Durchmesser als der Stab in nicht aufgeweitetem Zustand. Auch bei nichtzylindrischen Faserverbundwerkstoffenprofilen muss ein entsprechendes «Spiel» in der Bohrung vorgesehen sein.

Erfindungswesentlich ist, dass das Ende des Stabes in der Bohrung aufgeweitet ist. Als Aufweitungselemente können handelsübliche Teile, die in der Lage sind, die Stabsegmente auseinanderzupressen wie z.B. sogenannte Kreuznägel, u.a. verwendet werden. Aufweitungselemente können aus metallischen oder keramischen Materialien aber auch aus Kunststoffen bestehen.

Gewöhnlich wird nicht das voll aufgeweitete Stabende in die Ankerhülse gesteckt. Beim Zusammenbau eines erfindungsgemässen Krafteinleitungselementes für ein unidirektional verstärktes Rundprofil wird beispielsweise das Stabende entsprechend dem verwendeten Aufweitungselement in Faserrichtung eingekerbt. Das Aufweitungselement wird soweit in das Stabende hineingedrückt, dass es durch die elastische Klemmkraft der Profilsegmente fixiert ist. Die profilierte Ankerhülse wird dann soweit mit einem gefüllten Reaktionsharz ausgegossen, dass nach Einbringung des Stabendes der Spalt zwischen Hülse und dem eingesetzten Profil sowie auch zwischen dem Stab und dem Aufweitungselement vollständig ausfüllt. Stab, Aufweitungselement und Ankerhülse bilden nach dem Härten der Vergussmasse eine zuverlässige, gegen hohe statische und dynamische Lasten beständige Verbindung. Zwischen der Ankerhülse und dem nicht aufgeweiteten Bereich des Stabes verbleibt ein mit Vergussmasse ausgefüllter Zwischenraum bevorzugt im Bereich von 1 bis 3 mm. Vorzugsweise sollte die in der Bohrung eingebaute Stablänge 5 bis 15 mal so gross wie der Stabdurchmesser sein.

Das Vergusssystem muss eine Fliessfähigkeit besitzen, die ausreicht, alle Zwischenräume zwischen Stabsegementen, Aufweitungselement und Bohrung vollständig auszufüllen. Die Druckfestigkeit der Vergussmasse muss mindestens so gross sein wie die Druckfestigkeit des den Faserverbundwerkstoffstab zugrunde liegenden Matrixharzen. Je nach Einsatzbedingungen können noch weitere Forderungen an die Vergussmasse gestellt sein, beispielsweise eine Beständigkeit gegenüber der Temperatur und/oder bestimmten Medien. Die Palette der giessfähigen Elastomeren und Reaktionsharze ist sehr gross, besonders geeignet sind ungefüllte, ungesättigte Polyesterharze, Epoxidharze oder Polyurethanharze; sie können aber auch mit feinteiligen Füllstoffen gefüllt sein.

Mit den erfindungsgemässen Krafteinleitungselementen lassen sich Faserverbundwerkstoffe aus den unterschiedlichsten Ausgangsmaterialien verankern. Beispielhaft erwähnt seien glasfaserverstärkte Polyesterharzprofile, sowie Profile aus Kohlenstofffasern und Epoxidharzen, vorzugsweise mit unidirektionaler Faserorientierung.

Die Ankerhülsen bestehen vorzugsweise aus Metall, auch Bohrungen in Beton kommen in Frage. Bei runden Querschnitten ist das Profil der Innenfläche der Ankerhülse bevorzugt ein Gewinde. Bei gegossenen Ankerhülsen kann die Innenfläche auch eine andere Struktur haben.

Die Erfindung ist in der Zeichnung dargestellt und weiter beispielhaft beschrieben. Es zeigen:

Fig. 1 ein Krafteinleitungselement für einen zylindrischen Stab;

Fig. 2 Längsschnitt durch ein Krafteinleitungselement nach Fig. 1;

Fig. 3. Querschnitt durch ein Krafteinleitungselement nach Fig. 1;

Fig. 4 Aufweitungselement;

Fig. 5 Krafteinleitungselement für einen Stab mit quadratischem Querschnitt;

Fig. 6 Mauerwerksverankerung;

Fig. 7 Verbindungselement für zwei Profile.

Der Stab 1 aus einem unidirektional verstärkten Faserverbundwerkstoff steckt in einer Ankerhülse 2, in der der Stab verankert ist und über die die Kräfte in bekannter Weise weitergeleitet werden können. Die Ankerhülse 2 ist axial ausgeführt und mit einem Gewinde 3 versehen. Das Ende des Stabes 1 ist mit einem Kreuznagel 4 aufgeweitet. Der gesamte verbleibende freie Raum im Inneren der Ankerhülse ist lückenlos mit einer Vergussmasse 5 gefüllt.

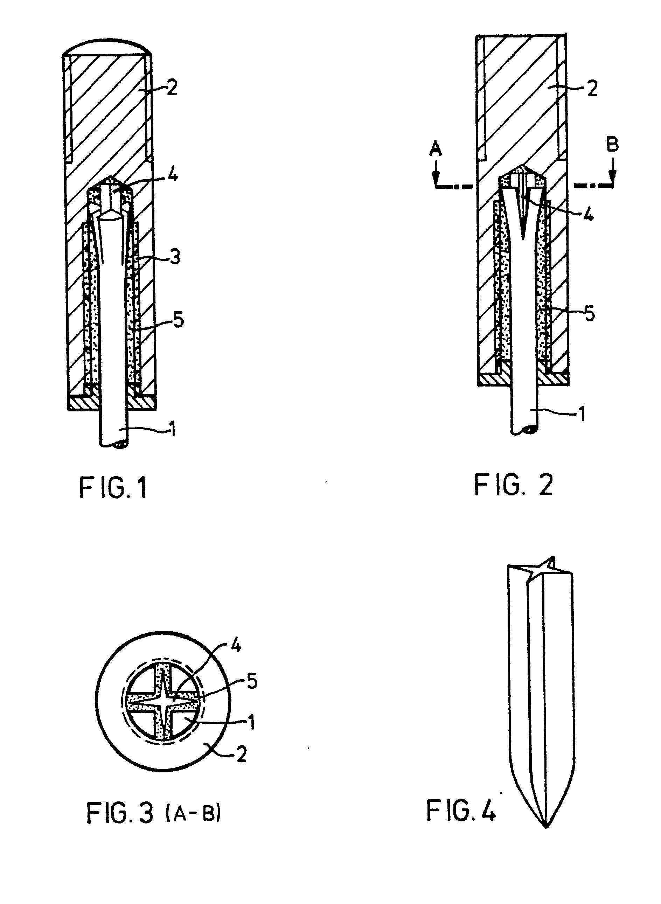

Die Bezugzeichen in Fig. 2 und 2 sind die gleichen wie in Fig. 1.

Fig. 4 zeigt ein geeignetes Aufweitungselement.

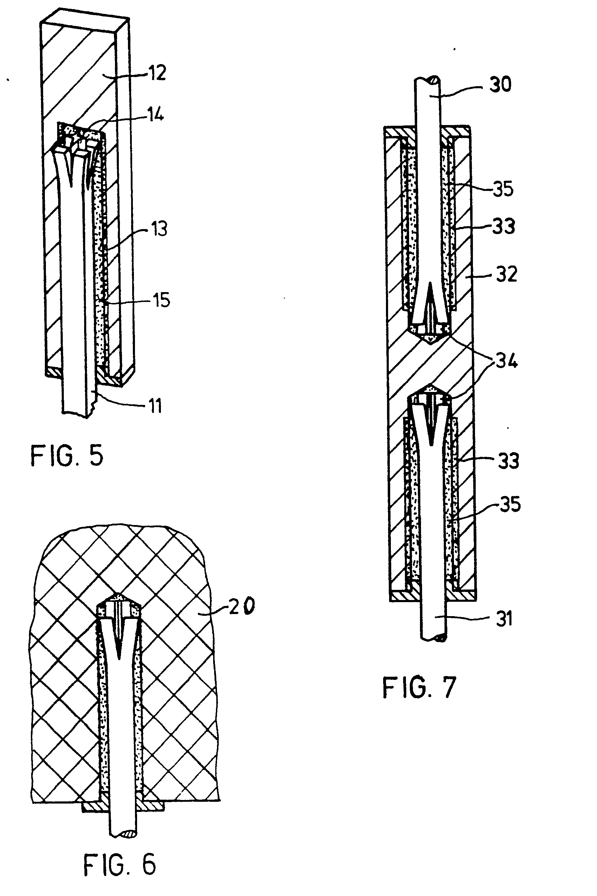

Bei einem rechteckigen oder quadratischen Profil des Faserverbundwerkstoffs 11, wie in Fig. 5, ist es zweckmässig, eine entsprechend eckig ausgebildete Ankerhülse 12 einzusetzen.

Auch hier muss eine Profilierung 13 senkrecht zur Stabrichtung 11 vorhanden sein und das Stabende mit einem entsprechenden Aufweitungselement 14 versehen und alle verbleibenden Hohlräume vollständig mit Vergussmasse 15 ausgefüllt sein.

In Fig. 6 ist eine Mauerwerksverankerung dargestellt. Dabei kann unter Umständen auf eine metallische Ankerhülse verzichtet werden. Eine ausreichende Profilierung der Bohrung kann beispielsweise durch Bohren in ausgehärteten Beton 20 oder durch Eingiessen von Kernen, die nach Aushärtung des Betons wieder entfernt werden, hergestellt werden. In Fig. 7 ist dargestellt wie Profile miteinander verbunden werden können. Die beiden Stäbe 30, 31 stecken in einer Ankerhülse 32, die von beiden Seiten her aufgebohrt und innenprofiliert 33 ist. Die Stabenden sind aufgeweitet 34 und eingegossen 35. Die Mehrfachverankerungen dienen zur Verbindung mehrerer Profile mit fluchtenden und/oder senkrecht zueinander stehenden Profilachsen.

Beispiel 1

Ein Faserverbundwerkstoffstab auf Basis eines ungesättigten Polyesterharzes und ca. 83 Gew.-% undirektional orientierter Glasfasern, der einen runden Querschnitt mit einem Durchmesser von 8 mm hatte, wurde an beiden Enden ca. 1 cm tief kreuzförmig eingeschnitten und Kreuznägel gemäss Fig. 4 von 35 mm Länge und einem Kreuzdurchmesser von 6 mm mit der Spitze soweit in das Profil eingedrückt, dass sie durch die elastische Klemmkraft des Profilsegmentes fixiert wurden.

Die Ankerhülsen bestanden aus dem Werkstoff St 52, hatten einen Aussendurchmesser von 25 mm, waren 80 mm lang und wurden mit einer durchgehenden Bohrung, in der M 14-Gewinde geschnitten waren, versehen.

Die Hülsen wurden einseitig temporär verschlossen und zu ca. ¾ ihrer Länge mit einem füllstoff-freien kalthärtenden Epoxidharz gefüllt und die Profilenden mit den Kreuznägeln fest hineingedrückt, so dass das Harz alle Zwischenräume zwischen den Gewindebohrungen, den Stabsegmenten und den Kreuznägeln vollständig ausfüllte. Die so hergestellten Verankerungen versagten im Zugversuch bei einer Belastung von 65 300 N.

Ein Faserverbundwerkstoffstab mit 8 mm $\varnothing$ und verankert gemäss Beispiel 1, der drei Monate lang dem Einfluss natürlicher Wirkung unter einer Belastung von 42 000 N ausgesetzt wurde, erreichte im anschliessenden Zugversuch eine Bruchkraft von 66 100 N.

Beispiel 2

Ein Rundstab mit einem Durchmesser von 7,5 mm aus einem Faserverbundwerkstoff auf Basis eines ungesättigten Polyesterharzes und ca. 80 Gew.-% unidirektional orientierter Glasfasern wurde an beiden Enden ca. 1 cm tief kreuzförmig eingeschnitten und Kreuznägel, wie in Fig. 4 dargestellt, von 35 mm Länge und einem Kreuzdurchmesser von 6 mm wurden mit der Spitze soweit in das Profil eingedrückt, dass sie durch die elastische Klemmkraft der Profilsegmente fixiert wurden. Die Ankerhülse bestand aus dem Werkstoff St 52 und hatte einen Aussendurchmesser von 20 mm. In die Sacklochbohrung von 65 mm Tiefe wurde ein M 12-Gewinde geschnitten. In das Sackloch wurden etwa 50 g einer schnell härtenden Vergussmasse eingefüllt und das Profilende mit dem Kreuznagel fest hineingedrückt. Die Vergussmasse bestand aus 20 Gew.-Teilen eines ungesättigten Polyesterharzes und je 40 Gew.-Teilen Quarzsand (1 mm Korndurchmesser) und Quarzmehl (Korndurchmesser – 200μm). Die Vergussmasse füllte alle Zwischenräume zwischen der Gewindebohrung, dem Stab und den Kreuznägeln vollständig aus. So hergestellte Krafteinleitungselemente versagten im Zugversuch bei einer Belastung von 58 600 N.

**Patentansprüche**

1. Krafteinleitende Befestigung eines Stabes (1, 11, 30, 31) aus einem Faserverbundwerkstoff, der zusammenwirkt mit einer in einer Verankerung (2, 12, 20, 32) angeordneten Bohrung wobei Querschnittsform von Bohrung und zu verankerndem Stab (1, 11, 30, 31) einander angepasst sind und die Wandung der Bohrung eine im wesentlichen senkrecht zum Stab verlaufende Profilierung (3, 13, 33) aufweist und zumindest ein Aufweitelement (4, 14, 34) für das Ende des Stabes (1, 11, 30, 31) vorgesehen ist und wobei der zwischen der Wandung der Bohrung dem Aufweitelement (4, 14, 34) und dem am Ende aufgeweiteten Stab (1, 11, 30,31) verbliebene Raum mit einer Vergussmasse vollständig ausgefüllt ist, dadurch gekennzeichnet, dass die Bohrung über ihre gesamte Länge gleichbleibenden Querschnitt und gleichbleibende Querschnittsform aufweist und dass der Stab (1, 11, 30, 31) über seine gesamte Länge innerhalb der Bohrung von deren Wandung Abstand aufweist, wobei die durch die Aufweitung bedingte natürliche Biegelinie der dabei entstandenen Stabsegmente unverändert erhalten bleibt.

2. Krafteinleitungselement nach Anspruch 1, dadurch gekennzeichnet, dass der Stab ein Faserverbundwerkstoffprofil mit unidirektionaler Faserorientierung ist.

3. Krafteinleitungselement nach Ansprüchen 1 und 2, dadurch gekennzeichnet, dass die Druckfestigkeit der Vergussmasse grössenordnungsmässig die Werte des dem Stab aus dem Faserverbundwerkstoff zugrundeliegenden Matrixharzes hat.

4. Krafteinleitungselement nach Anspruch 3, dadurch gekennzeichnet, dass als Vergussmasse ein ungefülltes oder gefülltes Reaktionsharz oder ein ungefülltes oder gefülltes giessfähiges Elastomer verwendet werden.

5. Krafteinleitungselement nach Ansprüchen 1 bis 4, dadurch gekennzeichnet, dass die Bohrung zylindrisch ausgebildet ist und die Innenseite der Ankerhülse mit einer Gewindestruktur versehen ist.

6. Krafteinleitungselement nach Ansprüchen 1 bis 4, dadurch gekennzeichnet, dass die Ankerhülse prismatisch ausgebildet ist und die Innenfläche der Ankerhülse mit einer Rasterung quer zur Stabrichtung versehen ist.

7. Kraftleitungselement nach Ansprüchen 1 bis 5, dadurch gekennzeichnet, dass die in der Bohrung eingebaute Stablänge 5 bis 15 mal so gross wie der Stabdurchmesser ist.

## Claims

1. Force transmitting means of fixing a rod (1, 11, 30, 31) of composite fibre material which cooperates with a bore in an anchoring means (2, 12, 20, 32), the cross-sectional form of which bore and the cross-sectional form of the rod (1, 11, 30, 31) which is to be anchored being adapted to one another and the wall of the bore having a profile (3, 13, 33) extending substantially perpendicularly to the rod and at least one spreading element (4, 14, 34) being provided for the end of the rod (1, 11, 30, 31) and the space left between the wall of the bore, the spreading element (4, 14, 34) and the rod (1, 11, 30, 31) which is increased in width at the end being completely filled with a filling compound, characterised in that the bore is uniform in cross-section and in cross-sectional form over its whole length and in that the rod (1, 11, 30, 31) is spaced apart from the wall of the bore over its whole length inside the bore, the natural bending line of the segments produced by the spreading out of the end of rod the rod being preserved.

2. Force transmitting element according to claim 1, characterised in that the rod is a composite fibre material section with unidirectional fibre orientation.

3. Force transmitting element according to claims 1 and 2, characterised in that the compression strength of the filling compound has a value of the same order of magnitude as the values of the matrix resin which forms the basis of the rod of composite fibre material.

4. Force transmitting element according to claim 3, characterised in that the filling compound used is a filled or unfilled reaction resin or a filled or unfilled pourable elastomer.

5. Force transmitting element according to claims 1 to 4, characterised in that the bore is cylindrical and the internal surface of the anchoring sleeve has a threaded structure.

6. Froce transmitting element according to claims 1 to 4, characterised in that the anchoring sleeve is prismatic and the internal surface of the anchoring sleeve has embossed elements extending transversely to the direction of the rod.

7. Force transmitting element according to claims 1 to 6, characterised in that the length of rod built into the bore is 5 to 15 times as great as the diameter of the rod.

## Revendications

1. Fixation, avec introduction de force d'une barre (1, 11, 30, 31) en une matière première composite de fibres coopérant avec un passage ménagé dans un ancrage (2, 12, 20, 32) les formes des sections transversales de ce passage et de la barre à ancrer (1, 11, 30, 31) étant adaptées l'une à l'autre et la paroi du passage précité comportant un profilage (3, 13, 33) s'étendant essentiellement perpendiculairement à la barre, au moins un élément d'évasement (4, 14, 34) étant prévu pour l'extrémité de la barre (1, 11, 30, 31) et l'espace subsistant entre la paroi du passage, l'élément d'évasement (4, 14, 34) et la barre (1, 11, 30, 31) évasée à son extrémité étant comblé complètement d'une masse de coulée, caractérisée en ce que, sur toute sa longueur, le passage a une section transversale uniforme et de forme constante, tandis que, sur toute sa longueur à l'intérieur du passage, la barre (1, 11, 30, 31) est écartée de la paroi de ce passage, la ligne de flexion naturelle duc l'évasement dans les segments de barre ainsi formés restant inchangée.

2. Elément d'introduction de force selon la revendication 1, caractérisé en ce que la barre est un profilé en matière première composite fibreuse dont les fibres ont une orientation unidirectionnelle.

3. Elément d'introduction de force selon les revendications 1 et 2, caractérisé en ce que la résistance à la pression de la masse de coulée a, en ordre de grandeur, les valeurs de la résine de la matrice constituant la base de la barre en matière première composite fibreuse.

4. Elément d'introduction de force selon la revendication 3, caractérisé en ce que, comme masse de coulée, on utilise une résine réactionnelle chargée ou non ou un élastomère apta à la coulée, également chargé ou non.

5. Elément d'introduction de force selon les revendications 1 à 4, caracrtérisé en ce que le passage a une forme cylindrique, tandis que la face intérieure de la douille d'ancrage est pourvue d'une structure filetée.

6. Elément d'introduction de force selon les revendications 1 à 4, caractérisé en ce que la douille d'ancrage est de configuraiton prismatique, tandis que la surface intérieure de cette douille d'ancrage est pourvue d'un quadrillage s'étendant transversalement au sens de la barre.

7. Elément d'introduction de force selon les revendications 1 à 6, caractérisé en ce que la longueur de barre introduite dans le passage est égale à 5–15 fois le diamètre de cette barre.

FIG. 1

FIG. 2

FIG. 3 (A-B)

FIG. 4

FIG. 5

FIG. 6

FIG. 7